Europäisches Patentamt

European Patent Office

Office européen des brevets

(11) Numéro de publication: **0 340 841 B1**

# FASCICULE DE BREVET EUROPEEN

(45) Date de publication de fascicule du brevet: **06.10.93**

(51) Int. Cl.5: **H04L 12/54**, H04L 12/58, H04J 3/08

(21) Numéro de dépôt: **89201057.0**

(22) Date de dépôt: **24.04.89**

(54) **Elément de circuit-point de croisement entre deux lignes omnibus.**

(30) Priorité: **29.04.88 FR 8805773**

(43) Date de publication de la demande:
**08.11.89 Bulletin 89/45**

(45) Mention de la délivrance du brevet:
**06.10.93 Bulletin 93/40**

(84) Etats contractants désignés:
**DE FR GB IT SE**

(56) Documents cités:

**IEEE JOURNAL ON SELECTED AREAS IN COMMUNICATIONS, vol. SAC-5, no. 9, décembre 1987, pages 1426-1435, IEEE, New York, US; K.Y. ENG et al.: "A knockout switch for variable-length packets"**

**ELECTRONICS, vol. 60, no. 20, 1 octobre 1987, pages 77-78, New York, US; B.C. COLE: "Ethernet or starlan? This controller does both jobs"**

(73) Titulaire: **TRT TELECOMMUNICATIONS RADIOELECTRIOUES ET TELEPHONIOUES**
**88 rue Brillat Savarin**
**F-75013 Paris(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB IT SE**

(72) Inventeur: **Ramel, Louis Société Civile S.P.I.D.**
**209, rue de l'Université**
**F-75007 Paris(FR)**
Inventeur: **Marin,Guy Société Civile S.P.I.D.**
**209, rue de l'Université**
**F-75007 Paris(FR)**

(74) Mandataire: **Pyronnet, Jacques et al**
**Société Civile S.P.I.D.**
**156, Boulevard Haussmann**
**F-75008 Paris (FR)**

EP 0 340 841 B1

**IEEE JOURNAL ON SELECTED AREAS IN COMMUNICATIONS, vol. SAC-5, no. 8, octobre 1987, pages 1284-1292, IEEE, New York, US; S. NOJIMA et al.: "Integrated services packet network using bus matrix switch"**

EP 0 340 841 B1

**Description**

L'invention concerne un point de croisement entre deux bus monodirectionnels indépendants l'un de l'autre pour multiplexage ATD d'information numérique constituée de paquets de données de longueur fixe consécutifs véhiculés par lesdits bus, ces paquets comportant un champ d'étiquette de n bits et un champ d'information de i bits n et i étant fixes et tels que n + i = d, pour transmettre sélectivement de l'information numérique d'un bus à l'autre.

Il existe de nombreux procédés et dispositifs pour commuter de l'information d'une ligne à une autre. Les procédés et dispositifs adaptés spécialement à la commutation de paquets ATD (Asynchronous Time Division en langue anglaise) sont beaucoup moins nombreux en raison de la nouveauté du concept ATD de multiplexage de l'information. Le multiplexage ATD de l'information fait actuellement l'objet d'une contribution au niveau du CCITT en vue d'une normalisation et peut être caractérisé en ce que l'information est découpée en paquets de longueur fixe, une étiquette de longueur fixe étant associée à chaque paquet et permettant d'identifier la communication à laquelle appartient chaque paquet. Sur la ligne de transmission les paquets sont consécutifs, c'est-à-dire qu'en l'absence d'information, la ligne véhicule des paquets vides (de même longueur que les autres), ne contenant aucune information mais munis chacun d'une étiquette, pour assurer le remplissage. La technique ATD a comme but principal d'atteindre les débits les plus élevés possible ; ceci introduit le problème des temps de propagation des signaux, qui n'est pas négligeable lorsqu'on souhaite conserver une synchronisation correcte entre les signaux porteurs d'information, leurs signaux d'horloge respectifs et les signaux de décision logique.

Le problème technique précis que se propose de résoudre l'invention est de pouvoir commuter les paquets d'information définis ci-dessus d'une ligne à une autre le plus rapidement possible c'est-à-dire d'un bus de départ à un bus d'arrivée, et ceci en prenant soin de ne pas retarder la propagation de l'information sur les bus de départ et d'arrivée. On notera que les paquets sont prévus d'une assez grande longueur, de l'ordre de 256 bits pour le champ d'information (i = 256) et 16,32 ou 48 bits par exemple pour l'étiquette (n = 16,32 ou 48). Par ailleurs, pour obtenir de hauts débits d'information sur les bus ces derniers sont généralement constitués par plusieurs conducteurs en parallèle, par exemple 16 conducteurs.

Dans un domaine technique assez éloigné de celui de l'invention, à savoir le domaine des systèmes graphiques numériques il est aussi nécessaire d'obtenir en certains points du système des débits d'information très élevés. On connaît, de la publication "Electronique, Techniques et Industries", N° 31 du 17 mars 1986, une mémoire RAM à double réseau, qui permet d'éviter un goulet d'étranglement limitant le débit du système graphique. Cette mémoire RAM comporte deux zones de mémoires sur une seule puce de circuit intégré. La première zone est une mémoire RAM dynamique de 256 K utilisée comme mémoire de visualisation et la deuxième zone est une mémoire RAM statique de 1 K adressée par un compteur intégré sur la puce qui permet un accès en série aux données de pixels. Ces deux zones travaillent indépendamment via des ports d'entrée-sortie séparés, sauf pendant les cycles de transfert au cours desquels les données de la deuxième zone sont transférées entièrement en parallèle de la deuxième à la première zone de mémoire, en moins de 200 ns. La structure de cette mémoire n'est cependant Pas conçue et n'est donc pas apte à transférer de l'information d'un bus à un autre.

En technique ATD, il est connu, en particulier du document IEEE JOURNAL ON SELECTED AREAS IN COMMUNICATIONS, vol. SAC-5, n° 9, décembre 1987, pages 1426-1435, IEEE, New-York, US, de K.I. ENG et al intitulé : "A knockout switch for variable-length packets", un commutateur de paquets ATD permettant des débits d'information élevés.

Ce commutateur opère entre plus de deux bus ; il nécessite un concentrateur du type dit "knockout" en anglais, ce qui introduit une perte de cellules, et cette publication se rapporte en outre à la commutation de paquets de longueur variable.

On connaît aussi du document IEEE JOURNAL ON SELECTED AREAS IN COMMUNICATIONS, vol.SAC-5 n° 8, octobre 1987, pages 1284-1292, IEEE, New-York, US, de S. NOJIMA et al intitulé : "Integrated services packet network using bus matrix switch", dans un réseau de transmission par paquets un commutateur à matrice de points de croisement de bus à raison d'un point de croisement par paire de bus composée d'un bus d'entrée et d'un bus de sortie. Il est précisé que la longueur d'un paquet peut être variable, ce qui implique des dispositions spécifiques pour la commutation des paquets. Selon cette technique la transmission est unidirectionnelle, du bus d'entrée de la matrice vers le bus de sortie de la matrice pour chaque paire et chaque bus comporte deux éléments en série d'entrée, I-PPU et PPD, respectivement de sortie, SPD, O-PPU.

Un but de l'invention est de réaliser en circuit(s) intégré(s) un point de croisement pour multiplexage ATD d'information numérique entre deux bus, très rapide, pour permettre un débit d'information élevé.

3

Un autre but est de permettre la réalisation de commutateurs importants à l'aide d'architectures variées utilisant comme éléments de base des points de croisement selon l'invention modulaires rapides entre bus pris par paires, ce qui correspond à un souci d'extensibilité.

Ces buts sont atteints grâce au fait que le point de croisement défini au premier paragraphe de la description est remarquable en ce qu'il est constitué par la combinaison de deux blocs fonctionnels de circuit intégré :

- Un premier bloc fonctionnel constitué par la succession en cascade entre l'un desdits bus, dit bus de départ, et l'autre bus, dit bus d'arrivée de :

a) un premier registre à décalage à entrée(s) série-d sorties parallèles disposé en coupure sur le bus de départ,

b) un premier registre tampon à d entrées parallèles-d sorties parallèles,

c) une mémoire RAM à m emplacements de d bits munie d'un bus d'adresses pour les m emplacements,

d) un deuxième registre tampon à d entrées parallèles-d sorties parallèles ;

e) un deuxième registre à décalage à d entrées parallèles-sortie(s) série disposé en coupure sur le bus d'arrivée,

- et un deuxième bloc fonctionnel logique de décision de commutation comportant au moins, disposés symétriquement par rapport aux bus de départ et d'arrivée, un organe de décision d'extraction (respectivement d'insertion) de paquet, associé chacun à une table de décision préprogrammée, qui reçoit les données d'étiquette des paquets sur le bus de départ (respectivement sur le bus d'arrivée) et qui pilotent chacun un organe de gestion de la RAM relié à cette dernière par ledit bus d'adresses, l'organe de gestion gérant la RAM comme au moins une file d'attente pour les paquets et recevant à cet effet un signal d'horloge HAC, des conducteurs de synchronisation d'horloge bit, d'horloge étiquette et d'horloge paquet étant prévus, et l'extraction non destructive de paquets du bus de départ ainsi que l'insertion de paquets sur le bus d'arrivée étant effectuées de manière asynchrone l'une par rapport à l'autre.

La structure du point de croisement défini ci-dessus est originale par ses registres tampons qui permettent d'adapter l'écriture (respectivement la lecture) de mots entiers en parallèle dans une RAM, à de hauts débits d'information sur un bus de départ (respectivement d'arrivée). Cette structure est aussi originale en ce que la RAM est gérée comme une (ou plusieurs) file(s) d'attente et en ce que, toujours pour conserver une vitesse élevée de transfert de l'information, ce transfert a lieu de façon unidirectionnelle à travers le point de croisement.

La fonctionnalité "point de croisement", constitue une analogie avec les architectures spatiales. En effet, un point de croisement peut être considéré comme un commutateur minimum entre deux bus ou lignes. Cependant, selon la technique ATD, l'information commutée n'est pas constituée par de l'information analogique mais par des paquets numériques de bits d'information. Cette particularité, qu'exploite pleinement le point de croisement selon l'invention, permet de combiner les avantages des architectures spatiales avec ceux des architectures temporelles soit pour recréer des architectures de commutateur connues soit pour créer de nouvelles architectures uniquement possibles par cette combinaison spatiale-temporelle.

L'étiquette est disposée, chronologiquement parlant en tête de chaque paquet, ce qui laisse le temps nécessaire, pendant la durée de chargement du premier (respectivement du deuxième) registre à décalage avec un paquet donné, de prendre, en fonction du contenu de l'étiquette de ce paquet la décision d'extraction ou de non extraction du paquet du bus de départ (respectivement la décision d'écrasement ou de non écrasement du paquet sur le bus d'arrivée). A ce sujet, on notera que les décisions logiques d'extraction ou d'insertion de paquet sont toujours portées par des étiquettes, selon la présente invention, car le temps de décision doit être court par rapport au temps de bit étant donnés les débits élevés recherchés. Pour cette raison, lorsque le point de croisement est réalisé sous la forme de deux circuits distincts comme indiqué ci-dessous, ces derniers doivent être disposés à quelques centimètres l'un de l'autre seulement en vue d'un bon fonctionnement, c'est-à-dire pour ne pas nuire à la synchronisation entre les signaux d'information et les signaux de décision logique fournis notamment à l'organe de gestion de la RAM. De cette façon, les décisions d'extraction ou d'insertion de paquet sont entièrement distribuées sur les points de croisement.

Selon un mode de réalisation particulier de l'invention, ledit deuxième bloc fonctionnel comporte en outre des registres internes E, F, G, H chargés avec des valeurs d'étiquette, chacun de ces registres comportant des sorties parallèles qui peuvent être commutées par un signal externe sur des(les) entrées parallèles des champs d'étiquette respectivement dudit premier registre à décalage, dudit premier registre tampon, ou dudit deuxième registre à décalage.

Un point de croisement est constitué des deux blocs fonctionnels définis ci-dessus. Ces blocs peuvent être réalisés sous la forme d'un circuit intégré unique ou sous la forme de deux circuits intégrés. Dans les deux cas, le nombre d'entrées-sorties de ces circuits est élevé, surtout pour des bus à 16 conducteurs ou plus, car chacun de ces circuits comporte nécessairement un nombre d'entrées-sorties égal à deux fois le nombre de conducteurs de chaque bus plus d'autres entrées-sorties qui sont précisées ci-dessous. De préférence, le point de croisement est réalisé en technologie C-MOS et ses différentes parties peuvent être conçues sous la forme dynamique et/ou statique. Les registres à décalage, les registres tampon et la RAM du point de croisement sont par exemple conçus pour traiter entièrement en parallèle des paquets dont la longueur est égale ou supérieure à 288 bits. Par exemple, la mémoire RAM comporte 128 ou 256 emplacements de mots de 288 bits ou plus. On notera par ailleurs que les débits d'information sur les bus de départ et d'arrivée peuvent être différents et même très différents.

La description qui suit en regard des dessins annexés, le tout donné à titre d'exemple fera bien comprendre comment l'invention peut être réalisée.

La figure 1 est le schéma synoptique fonctionnel partiel d'un premier mode de réalisation du point de croisement selon l'invention.

La figure 2 est le schéma synoptique fonctionnel du premier mode de réalisation du point de croisement selon l'invention.

La figue 3 est le schéma synoptique fonctionnel partiel d'un deuxième mode de réalisation du point de croisement selon l'invention.

Les figures 4 à 16 se rapportent à des parties du deuxième mode de réalisation de la figure 3.

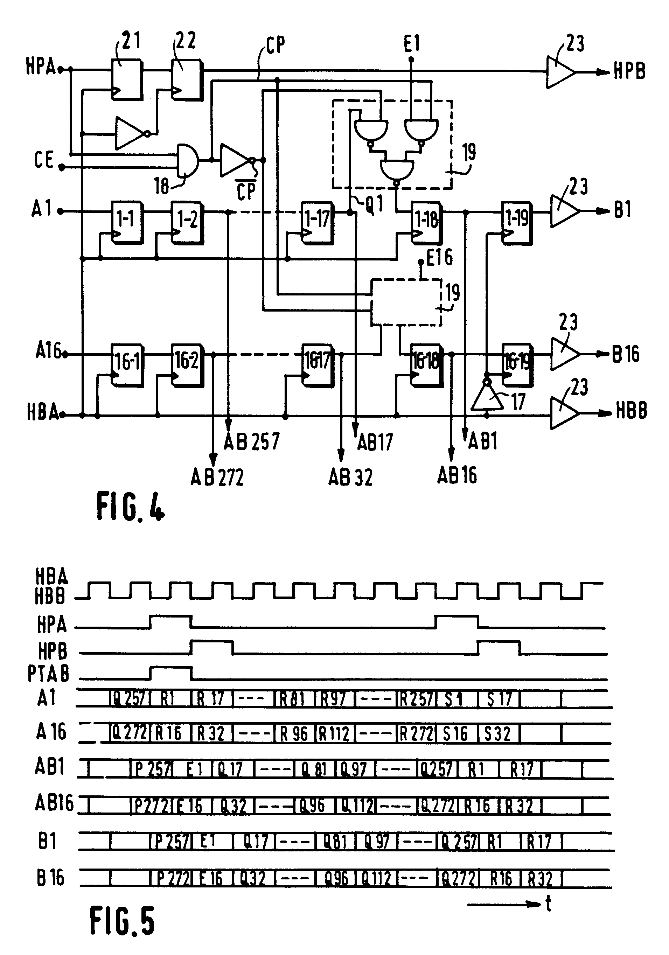

La figure 4 est le schéma électrique du premier registre à décalage A vers B.

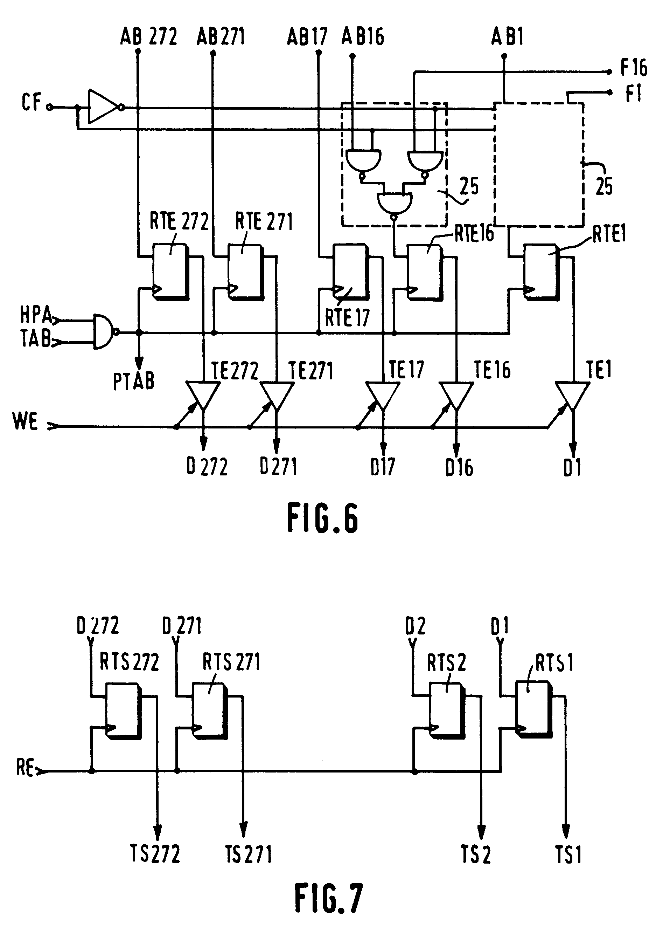

La figure 5 est un diagramme de temps illustrant le fonctionnement du premier registre à décalage de la figure 4.

La figure 6 est le schéma du premier registre tampon.

La figure 7 est le schéma du deuxième registre tampon.

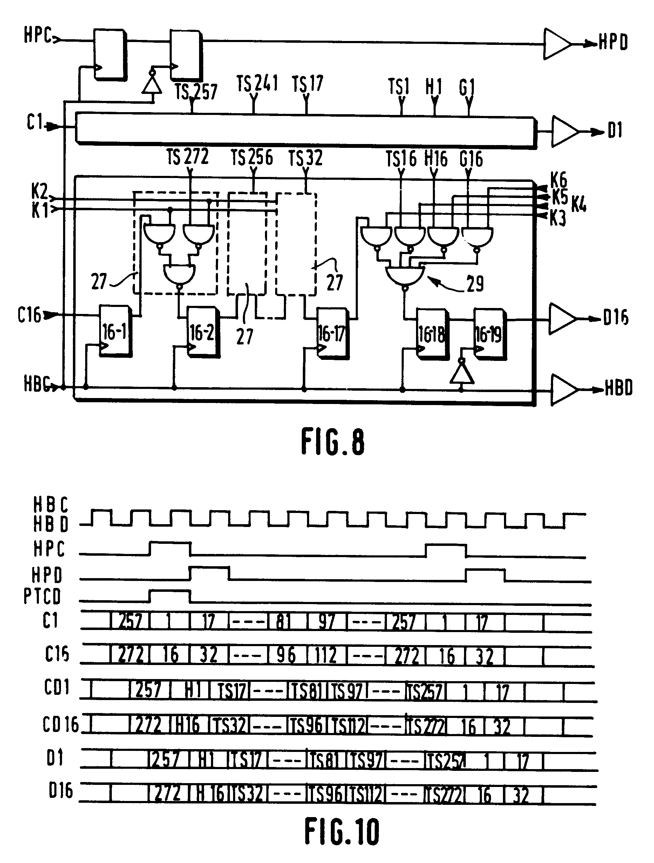

La figure 8 est le schéma du deuxième registre à décalage C vers D.

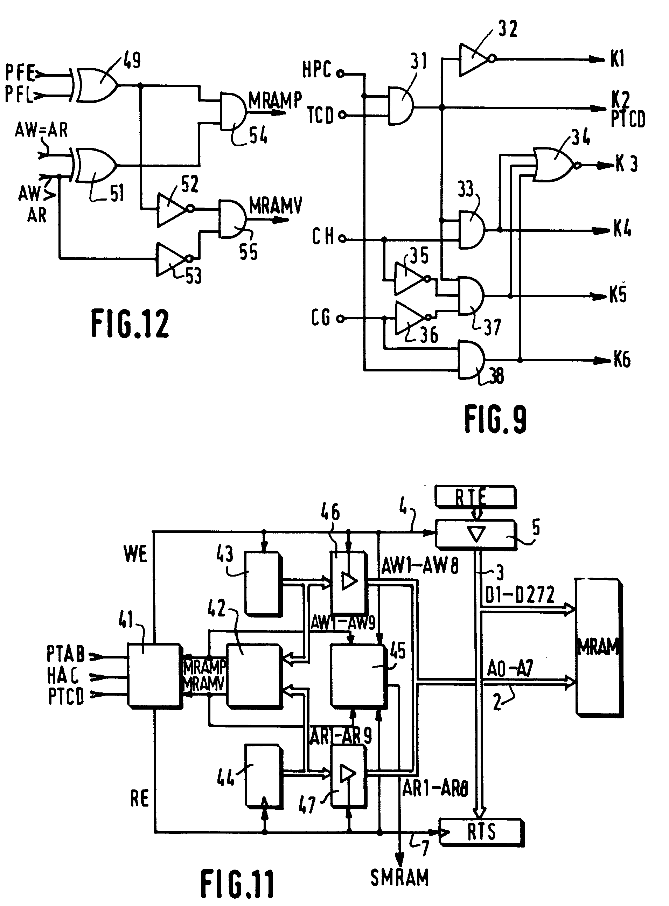

La figure 9 représente un circuit logique servant à engendrer des signaux logiques à appliquer à certaines entrées du circuit de la figure 8.

La figure 10 est un diagramme de temps illustrant le fonctionnement du deuxième registre à décalage de la figure 8.

La figure 11 est un schéma synoptique de l'organe de gestion de la RAM, en liaison avec les registres tampons et la RAM.

La figure 12 représente un circuit logique servant à engendrer des signaux logiques internes à l'organe de gestion de la RAM.

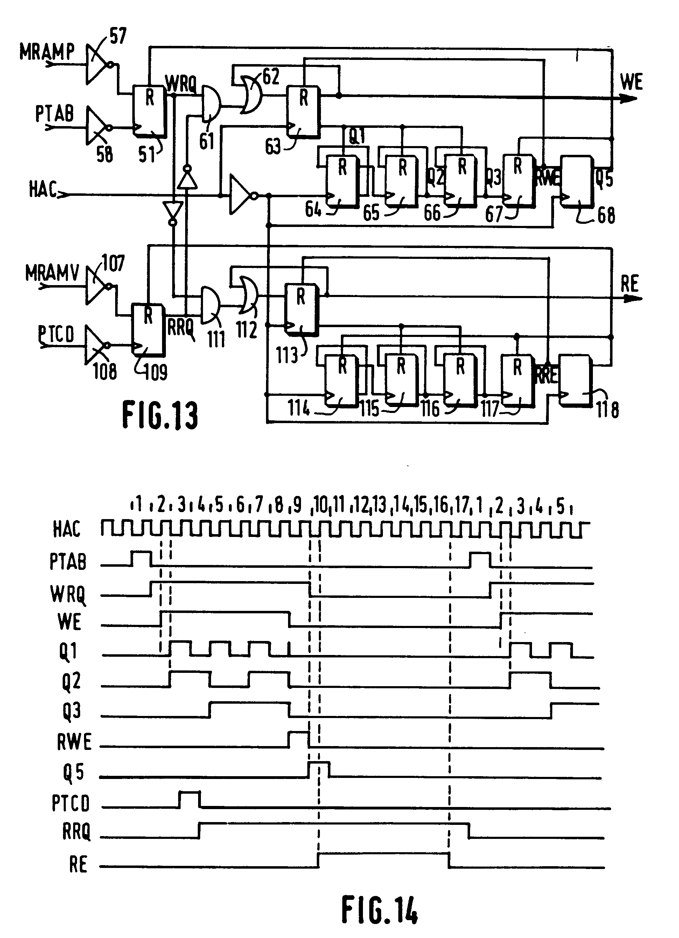

La figure 13 est un schéma électronique du bloc-circuit de commande de la RAM représenté sur la figure 11.

La figure 14 est un diagramme de temps illustrant le fonctionnement du circuit de la figure 13.

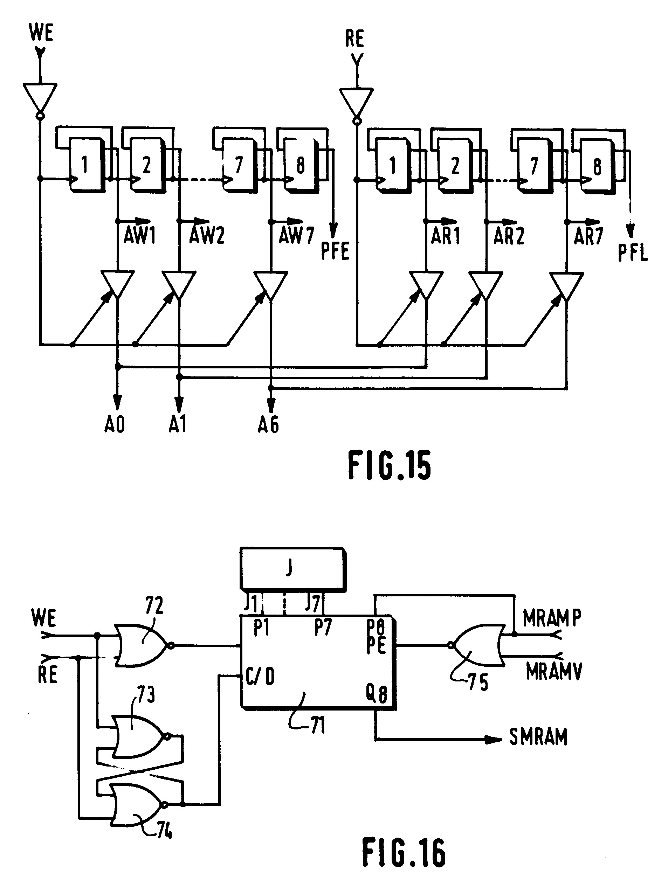

La figure 15 est un schéma électronique des pointeurs d'adresse écriture et lecture représentés sur la figure 11.

La figure 16 est un schéma électronique du circuit de seuil représenté sur la figure 11.

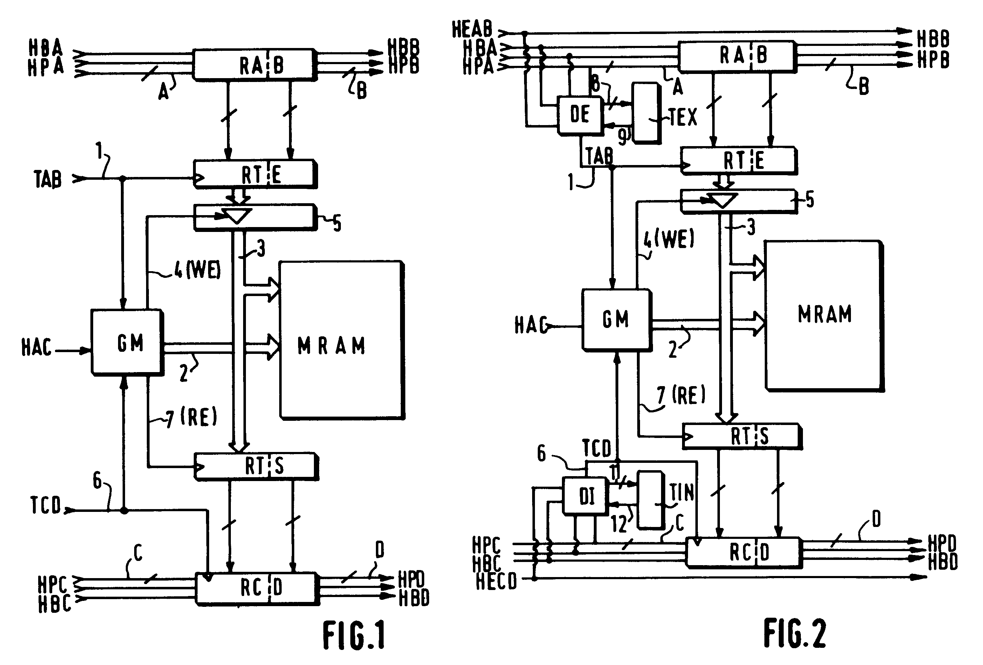

Sur la figure 1 on distingue les éléments suivants :

A-B        un premier bus monodirectionnel dit bus de départ,

C-D        un deuxième bus monodirectionnel dit bus d'arrivée,

MRAM     un plan mémoire RAM dont la largeur de mot est égale à celle d'un paquet, soit d bits et qui peut contenir m mots ou emplacements,

GM        un organe de gestion de MRAM

RAB      un premier registre à décalage A vers B et sortie parallèles vers RTE,

RTE       un premier registre tampon entre RAB et MRAM

RCD      un deuxième registre à décalage C vers D et entrée parallèle en provenance de RTS,

RTS       un deuxième registre tampon entre MRAM et RCD

HBA      le fil d'horloge bit du bus A

HBB      le fil d'horloge bit du bus B

HPA      le fil d'horloge paquet du bus A

HPB      le fil d'horloge paquet du bus B

HBC      le fil d'horloge bit du bus C

HBD      le fil d'horloge bit du bus D

HPC      le fil d'horloge paquet du bus C

HPD      le fil d'horloge paquet du bus D

HAC        l'entrée d'horloge de l'organe de gestion GM

TAB        un premier signal de commande logique du registre tampon RTE et de l'organe GM,

TCD        un deuxième signal de commande logique du registre à décalage RCD et de l'organe GM,

Les registres à décalage RAB et RCD ont soit la même longueur de d bits que celle des paquets, soit une longueur supérieure à d.

L'information se propage sur le bus A-B au rythme des horloges HBA et HBB, synchrones, qui sont fournies au registre RAB. Le registre RAB est disposé en coupure sur le bus A-B. Pour chaque fil du bus A-B (ce bus pouvant au moins en théorie se réduire à un seul fil), les bits des paquets entrent, sortent et se décalent à l'intérieur du registre, en série. Pour chaque paquet circulant sur le bus A-B, l'ordre de transfert du registre RAB vers MRAM s'effectue au moyen de l'ordre logique TAB à l'état bas donné, sur un conducteur 1 au registre tampon RTE pour que ce dernier emmagasine, en moins d'un temps de bit, le contenu du registre RAM et, simultanément, à l'organe de gestion GM de MRAM. Cet ordre se traduit par une commande d'écriture du contenu du registre tampon RTE dans MRAM à une adresse pointant un emplacement de mot vide dans MRAM. Cette adresse est portée par un bus d'adresse 2 qui relie l'organe GM à MRAM et qui sert aussi de bus d'adresse en lecture. Le transfert effectif d'un paquet du registre RTE dans MRAM, sur un bus de données 3, résulte d'un signal logique WE à l'état bas, issu de l'organe de gestion GM, porté par un conducteur 4 et qui met en basse impédance la sortie 5 du registre RTE.

Le fonctionnement du côté du bus C-D est analogue à ce qui est décrit au paragraphe précédent. A ce sujet, il est important de noter que le fonctionnement du bus C-D est totalement indépendant du fonctionnement du bus A-B tant au point de vue du synchronisme que du débit de l'information ou des décisions d'extraction, respectivement d'insertion. L'information se propage sur le bus C-D au rythme des horloges HBC et HBD, synchrones, qui sont fournies au registre RCD. Le registre RCD est disposé en coupure sur le bus C-D. Pour chaque paquet circulant sur le bus C-D, l'ordre de transfert d'un paquet du registre tampon RTS vers le registre à décalage RCD s'effectue au moyen de l'ordre logique TCD donné, sur un conducteur 5, à la fois à l'organe de gestion GM et au registre à décalage RCD. L'action n'est réellement entreprise et s'effectue en parallèle en moins d'un temps de bit, que lorsqu'un paquet est contenu intégralement dans le registre RCD. L'ordre d'insertion de paquet se traduit par une commande de lecture imposée par un(le) signal logique TCD à l'état bas sur l'entrée de mémorisation du registre RCD. Juste après ce transfert un nouveau paquet est transféré de MRAM dans le registre tampon RTS. Ce deuxième transfert s'effectue à partir du même signal logique TCD ; en effet ce deuxième transfert résulte d'un signal logique RE à l'état bas, issu de l'organe de gestion GM sur commande du signal TCD à l'état bas, porté par un conducteur 6 et qui est appliqué à l'entrée de mémorisation du registre RTS. Pendant le deuxième transfert, MRAM est adressée en lecture par le bus d'adresses 2 et les données circulent de MRAM au registre RTS sur le bus de données 3.

L'organe de gestion du plan mémoire, GM, reçoit des ordres logiques TAB et TCD en provenance des conducteurs 1 et 6 d'une manière totalement asynchrone. L'organe GM est conçu pour régler dans le temps les conflits d'accès au plan mémoire MRAM, plus précisément pour organiser dans le temps les cycles d'écriture et de lecture dans MRAM. On sait en effet qu'il n'est pas possible d'inscrire et de lire simultanément une mémoire RAM. Si un ordre de lecture de MRAM vers RTS, consécutif au transfert du contenu de RTS dans RCD, est présent sur le conducteur 6 alors que MRAM est en cours d'inscription, l'ordre de lecture en question est mémorisé, en GM, jusqu'à ce que l'ordre d'écriture soit terminé à un instant $t_5$ et ne commence qu'après une temporisation initiée en $t_5$. Le fonctionnement, symétrique, est identique pour un ordre d'écriture du contenu de RTE dans MRAM arrivant pendant l'exécution d'un cycle de lecture. Les mémorisations et temporisations sont effectuées en GM au moyen de circuits logiques attaqués par l'horloge HAC. On notera à ce sujet que la fréquence de l'horloge HAC est égale ou supérieure à la plus haute fréquence d'horloge bit HBA ou HBC. Outre le règlement des conflits écriture/lecture dans MRAM, pour assurer l'asynchronisme entre les registres série RAB et RCD qui fonctionnent sur une horloge bit HBA et HBC et la mémoire MRAM qui fonctionne au rythme d'une horloge paquet HPAB ou HPCD, les registres tampons RTE et RTS, qui fonctionnent entièrement en parallèle, ont été associés à chaque registre série. De plus, ils permettent l'isolement entre le bus d'adresses du plan mémoire et les accès parallèles des bus série ; autrement dit, les transferts en parallèle en moins d'un temps de bit du contenu du registre RAM vers MRAM et d'un mot issu de MRAM vers le registre RCD sont ainsi rendus possibles, et compatibles avec les cycles d'écriture et de lecture de MRAM à partir du même bus d'adresse 2.

La mémoire MRAM est gérée comme une ou plusieurs files d'attente par l'organe de gestion GM et, dans les deux cas, chaque file d'attente n'assure l'échange que dans le sens du bus A-B vers le bus C-D. Ceci permet de réaliser simplement le point de croisement à partir d'un plan mémoire et d'un organe de gestion. L'utilisation d'un plan mémoire à accès aléatoire, MRAM, permet d'obtenir une capacité de mémoire maximale à surface de composant égale. L'organe de gestion du plan mémoire GM transforme MRAM en une ou plusieurs files d'attente. D'autre part, comme le temps d'accès au plan mémoire est l'élément critique du point de croisement, la longueur des mots est la plus grande possible. Ainsi, pour un même nombre de bits commutés donné, le nombre d'accès sera inversement proportionnel à la longueur du mot. Dans ces conditions, la longueur de mot préférée est la longueur d'un paquet. Le fait que la file d'attente n'assure des échanges que dans un seul sens correspond au fonctionnement le plus courant prévu pour le point de croisement. Cette disposition simplifie plusieurs points critiques de la réalisation, à savoir : en premier lieu, le temps d'accès au plan mémoire est limité et ce temps serait double si l'on devait introduire des files d'attente avec des sens opposés, en second lieu la puissance consommée par l'accès au plan mémoire est ainsi réduite. Ce sens unique de la file d'attente simplifie la réalisation des registres tampons et des registres série, ce qui facilite l'intégration et accroît la vitesse de fonctionnement. On notera que lorsque, dans le cas préféré, MRAM ne comporte qu'une file d'attente, cette mémoire est organisée comme une FIFO. A cet effet, les adresses en écriture et en lecture sont, par exemple engendrées respectivement par des pointeurs d'adresses, c'est-à-dire par des compteurs qui sont incrémentés d'une unité après chaque écriture, respectivement chaque lecture dans la RAM. Les emplacements mémoire de MRAM sont ainsi exploités de façon cyclique par les deux pointeurs, le pointeur en lecture devant naturellement être en retard sur le pointeur en écriture. Des interdictions peuvent résulter d'une configuration de blocage telle que : MRAM pleine lors d'une demande d'écriture ou, à l'inverse, MRAM vide lors d'une demande de lecture. Dans ces deux cas, l'ordre ne doit pas être exécuté et dans ce but, l'organe de gestion GM peut comporter un dispositif de mesure du taux de remplissage qui reçoit en permanence les adresses des pointeurs d'adresse en écriture et en lecture, qui établit la différence entre ces adresses et qui engendre un signal d'inhibition d'écriture, respectivement de lecture, lorsque MRAM est pleine, respectivement vide.

La fonction de multiplexage du point de croisement selon l'invention a pour objet de mélanger au flux de paquet qui arrive sur le bus C, le flux de paquet en provenance de la file d'attente de MRAM. Le flux résultant sort en D. La mise en oeuvre du multiplexage réalisé exploite la particularité qu'ont les paquets ATD, d'être de longueur constante et consécutifs. En l'absence d'information il y a des paquets dont le champ information est sans signification. Le procédé de multiplexage est très simple et consiste simplement en le registre série RCD entre les bus C et D avec une entrée parallèle depuis la file d'attente et qui a la longueur d'un paquet. Le multiplexage consiste, au moment où le registre RCD contient exactement un paquet vide, à l'écraser par le paquet qui se trouve en tête de la file d'attente, plus précisément le paquet qui se trouve préchargé dans le registre tampon RTS. Comme ce remplacement se fait totalement à l'intérieur du registre RCD, il n'y a aucun conflit d'accès au bus C-D avec un autre point de croisement. En raison de sa grande simplicité de conception, la méthode de multiplexage précitée, mise en oeuvre par le point de croisement selon l'invention est très facile à intégrer et permet des débits élevés.

La logique de décision d'extraction ou d'insertion de paquet est totalement distribuée comme décrit ci-dessous en référence à la figure 2.

La mémoire MRAM peut être organisée par exemple comme deux files d'attente dans le but de rendre prioritaire totalement ou partiellement la deuxième file d'attente par rapport à la première. La deuxième file d'attente est alors celle qui est vidée la première, pour une priorité totale. Pour une priorité partielle correspondant à une logique mixte, l'homme de l'art fait en sorte que, par exemple, la deuxième file d'attente se vide d'abord mais pendant un temps limité après lequel la première file d'attente peut se vider à son tour. Pour un abonné qui souhaite à la fois pouvoir émettre ou recevoir de l'information, l'équipement pour la connexion de cet abonné à un bus du réseau nécessite deux points de croisement fonctionnant l'un dans la direction de la réception (du bus A-B vers le bus C-D), l'autre dans la direction de l'émission (du bus C-D vers le bus A-B), ce qui se traduit par une permutation des bus de départ et d'arrivée pour la commutation des paquets.

Les débits d'information sur les bus A-B et C-D peuvent être comparables ou bien très différents et se compter en Mbits/s sur un bus et en kbits/s sur l'autre bus.

On notera aussi que si le registre à décalage RCD est nécessairement en coupure sur le bus d'arrivée, en tant que registre d'arrivée d'information en provenance d'un autre bus d'information, il n'en est pas de même du registre RAB sur le bus de départ, dont la position en coupure n'est pas indispensable. En effet, le registre RAB pourrait être disposé en dérivation par rapport au bus A-B, ce qui aurait l'avantage d'économiser, sur le bus A-B, le temps de remplissage du registre RAB pour le temps de propagation des paquets. Cependant, on préfère, selon la présente invention, conserver le registre à décalage en coupure sur le bus de départ, pour une meilleure régénération des signaux et une bonne resynchronisation de ces signaux avec leur horloge bit. Un autre avantage qui apparaît sur la figure est de conserver au composant une certaine symétrie.

Le point de croisement de la figure 1 est réalisé de préférence sous la forme d'un seul élément de circuit intégré, en technologie CMOS. Pour des bus A-B et C-D à 16 conducteurs, cet élément comporte 75 entrées sorties, parmi lesquelles 64 pour le raccordement aux bus A, B, C et D.

La figure 2 représente le premier mode de réalisation complet de l'invention dans lequel on retrouve tous les éléments de la figure 1 et qui comporte en outre les éléments suivants :

HEAB       le fil d'horloge étiquette du bus A-B

DE          un organe de décision d'extraction de paquet depuis le bus A-B vers le plan mémoire MRAM,

TEX         une table de décision associée à DE

HECD       le fil d'horloge étiquette du bus C-D

DI           un organe de décision d'insertion de paquet depuis le plan mémoire MRAM vers le bus C-D,

TIN          une table de décision associée à DI.

Selon ce premier mode de réalisation c'est l'étiquette de chaque paquet sur le bus A, respectivement sur le bus C, qui porte l'information nécessaire à l'extraction, respectivement l'insertion de paquet.

Sur la figure 2, les fils d'horloges HEAB, HPA et HBA sont reliés à l'organe de décision d'extraction de paquet DE ainsi que le (ou les) conducteur(s) du bus A qui est (sont) relatif(s) au champ d'étiquette. L'horloge HPA détermine, en DE, l'instant $t_2$ auquel la totalité du paquet issu du bus A (information utile plus étiquette) se trouve dans le registre RAB. L'horloge HEAB détermine, en DE, l'instant $t_1$ auquel l'organe DE a reçu la totalité de l'étiquette de chaque paquet. On notera que l'étiquette est disposée, chronologiquement parlant, en tête de chaque paquet, ce qui revient à dire que l'instant $t_1$ précède l'instant $t_2$. La durée $t_2$-$t_1$ est mise à profit pour prendre la décision d'extraction ou de non extraction du paquet contenu dans le registre RAB à l'instant $t_2$ et pour effectuer ce transfert, en cas de décision d'extraction, en moins d'une période d'horloge HBA, du registre RAM en parallèle vers le registre tampon RTE. Autrement dit, lorsque l'organe DE a reçu la totalité de l'étiquette il est à même, sur la base du contenu de l'étiquette et en fonciton de sa logique interne, de prendre l'une des deux décisions suivantes : soit dans un premier cas, le paquet doit être copié depuis le registre RAB vers le plan mémoire MRAM, soit dans un deuxième cas, le paquet ne doit pas être copié dans le plan mémoire MRAM. Cet ordre de copie ou non de chaque paquet, est fourni par l'organe DE au conducteur 1 ; il constitue l'ordre logique TAB de la figure 1.

De façon symétrique, les fils d'horloges HECD, HPC et HBC sont reliés à l'organe de décision d'insertion de paquets DI ainsi que le(les) conducteur(s) du bus qui est(sont) relatif(s) au champ d'étiquette. L'horloge HPC détermine en DI, l'instant $t_4$ auquel la totalité du paquet issu du bus C (information utile plus étiquette) se trouve dans le registre RCD. L'horloge HECD détermine, en DI, l'instant $t_3$ auquel l'organe DI a reçu la totalité de l'étiquette de chaque paquet. Comme sur le bus A-B, l'étiquette est disposée en tête de chaque paquet, ce qui implique que $t_3$ est antérieur à $t_4$. La durée $t_4$-$t_3$ est mise à profit pour prendre la décision d'insertion ou de non insertion d'un paquet, du registre RTS qui le contient, dans le registre RCD à l'instant $t_4$ et d'effectuer ce transfert, en cas de décision d'insertion, en moins d'une période d'horloge HBC, du registre RTS, en parallèle, vers le registre RCD. Autrement dit, lorsque l'organe DI a reçu la totalité de l'étiquette, il est à même, sur la base du contenu de l'étiquette et en fonction de sa logique interne, de prendre l'une des deux décisions suivantes : soit dans un premier cas, le paquet en provenance du bus C qui porte cette étiquette est un paquet non vide et dans ce cas la décision est de ne pas faire d'insertion et de laisser le paquet contenu dans le registre RCD sortir sur le bus D ; soit dans un deuxième cas, le paquet en provenance du bus C est vide, c'est-à-dire que son champ d'information est sans signification et dans ce cas la décision prise entre les instants $t_3$ et $t_4$ sera de copier le paquet qui est dans le registre RTS, en provenance du plan mémoire MRAM, dans le registre RCD et donc d'écraser le paquet vide qui s'y trouve. Bien entendu, le fait que le paquet entrant sur le bus C soit vide n'est pas forcément suffisant pour entraîner son écrasement dans le registre RCD ; l'organe de décision d'insertion DI peut en effet tenir compte d'autres informations contenues dans l'étiquette du paquet pour décider d'écraser ou non le paquet. L'ordre de copier ou non le paquet de RTS dans RCD est fourni par l'organe DI au conducteur 6 ; il constitue l'ordre logique TCD de la figure 1.

La logique de décision d'extraction ou d'insertion de paquet est constituée par les blocs DE, TEX, respectivement les blocs DI, TIN. C'est cette logique qui prend la décision du transfert d'un bus A-B (ou C-D) sur l'autre C-D (ou A-B). Cette logique est totalement distribuée, c'est-à-dire que non seulement elle est associée à chaque point de croisement et indépendante de celle des autres mais elle est aussi constituée de deux dispositifs indépendants pour le bus A-B et le bus C-D. Les deux dispositifs utilisent la même solution matérielle et sont totalement programmables. On notera que, pour réaliser un commutateur de très grande puissance une logique de décision centralisée n'est pas concevable compte tenu des débits très élevés recherchés qui laissent trop peu de temps pour trouver la ligne de sortie associée à chaque paquet entrant, d'autant plus qu'il faut encore réduire ce temps pour tenir compte du temps de propagation des signaux. Dans la solution retenue, la logique de décision est associée non seulement à chaque point de

8

croisement mais aussi à chaque bus dont les distances à parcourir par les signaux de décision sont négligeables et les décisions ne portent que sur les paquets du bus A-B ou du bus C-D et ne dépendent d'aucune décision d'un autre point de croisement. En principe, toutes les informations nécessaires à la décision sont véhiculées avec le paquet lui-même dans un champ de l'étiquette. On peut cependant envisager que des signaux, en provenance de l'extérieur par rapport au point de croisement soient combinés avec les contenus des étiquettes des paquets pour confirmer ou au contraire inhiber les décisions. La solution retenue ici, qui est une solution distribuée permet d'organiser aisément des points de croisement en différentes architectures ; cela est d'autant plus facile que la solution retenue, conformément à la figure, permet en un seul cycle d'analyser toutes les combinaisons possibles du champ étiquette qui sert à la décision. La réalisation pratique de cette logique de décision dans le point de croisement est très simple puisqu'il s'agit, dans le cas le plus simple à envisager, d'une table de $2^n$ bits adressée par le champ de décisions de l'étiquette qui comprend n bits. A la valeur 0 ou 1 du bit adressé, correspond la décision de ranger ou non ce paquet en mémoire, respectivement de le remplacer ou pas par un paquet de la mémoire MRAM. Sur la figure 2, l'organe DE est relié à la table TEX par un bus d'adresse à n conducteurs, 8. L'étiquette de chaque paquet sur le bus A est transmise au bus 8. La table de décision TEX comporte $2^n$ emplacements, adressés par le bus 8 et dont le contenu est pré-programmé à 0 ou à 1. Le contenu de l'emplacement adressé par le bus 8 est transmis de TEX à DE par un conducteur 9. Cette dernière information, éventuellement complétée par une information en provenance de l'extérieur, non représentée, se traduit en DE par une commande d'extraction ou de non extraction de paquet du registre RAB.

Les organes DI et TIN ont une structure et un fonctionnement identique à DE et TEX ; ils sont reliés entre eux par le bus 11, homologue de 8, et le conducteur 12, homologue de 9.

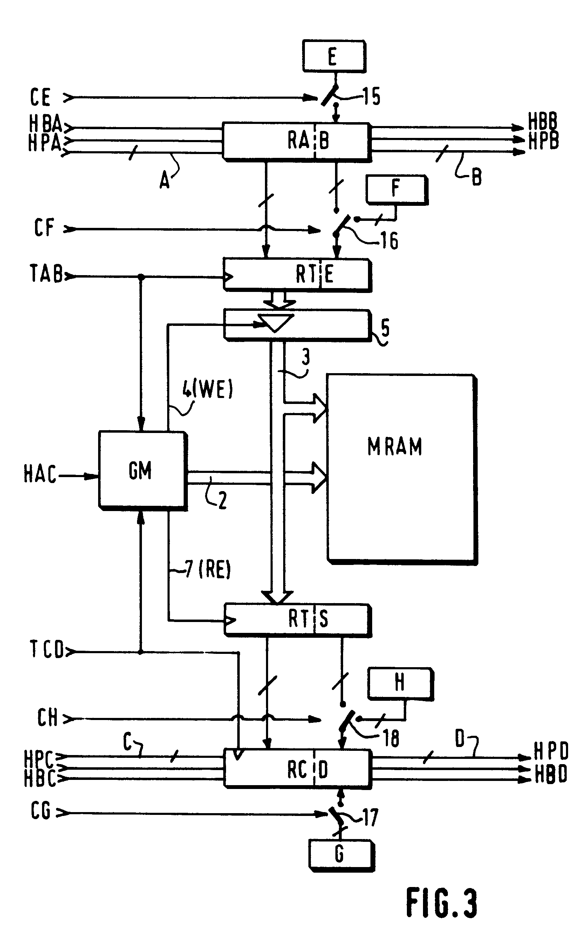

La figure 3 représente une partie d'un deuxième mode de réalisation de l'invention dans lequel on retrouve tous les éléments de la figure 1 et qui comporte en outre des registres internes parmi lesquels les registres E, F, G, H sont destinés à contenir des valeurs d'étiquettes et le registre J, non représenté, une valeur de seuil. Pour le troisième mode de réalisation on choisit de préférence les contraintes de réalisation suivantes :
- utilisation de portes élémentaires,
- utilisation de bascules de type D-FF, c'est-à-dire de bascules D C-MOS équivalentes à la 4013 pour la réalisation des registres,
- utilisation d'un bloc mémoire statique pour la réalisation de MRAM.

On notera qu'on peut aussi réaliser certains registres sous forme de registres dynamiques, utiliser des bascules de type verrou ou bascules D-L et un bloc mémoire MRAM dynamique.

La modification des étiquettes prévue selon le mode de réalisation de la figure 3 convient pour la commutation des circuits virtuels en technique X-25.

Pour compléter le deuxième mode de réalisation de l'invention, il faut rajouter les éléments suivants de la figure 2 : HEAB, DE, TEX, HECD, DI, TIN, ainsi que leurs liaisons.

Les registres E, F, G, et H sont par exemple remplis, de façon non représentée, par une interface série synchrone ; leurs sorties, en parallèle, sont reliées à des entrées parallèles d'étiquette, par des commutateurs multiples, le commutateur 15 pour E vers le registre RAB sous la commande d'un signal logique CE, le commutateur 16 pour F vers le registre RTE sous la commande du signal logique CF, le commutateur 17 pour G vers le registre RCD sous la commande du signal logique CG et le commutateur 18 pour H vers le registre RCD sous la commande du signal logique CH. Une utilité du changement d'étiquette est par exemple la suivante, en ce qui concerne le registre d'étiquette E : on peut décider que lors-qu'un paquet est extrait du registre RAB à destination du bus C-D, il n'est plus utile sur le bus de départ A-B bien qu'il continue sur ce bus. Le registre E sert alors, à l'occasion du passage de ce paquet dans le registre RAB, à transformer son étiquette en étiquette de paquet libre, c'est-à-dire de paquet vide, dont le champ d'information utile, désormais sans signification, peut être ultérieurement écrasé. On notera que cette modification d'étiquette sur le bus de départ A-B n'est possible qu'avec un registre à décalage RAB disposé en coupure sur ce bus de départ, ce qui est encore le cas dans ce troisième mode de réalisation.

La longueur du registre RAB correspond au moins à celle d'un paquet. Quand RAB contient un paquet, ce dernier peut, par décision extérieure, être transféré dans MRAM avec ou sans modification de son étiquette selon la valeur du signal logique CF. Le registre de sortie RCD est en coupure sur le bus C-D. Sa longueur correspond également au moins à celle d'un paquet. Quand RCD contient un paquet, ce dernier peut, par décision extérieure, être remplacé par un paquet provenant de MRAM avec ou sans modification de son étiquette selon la valeur du signal logique CH. Par ailleurs, les paquets circulant sur les bus A-B et C-D peuvent, sur décision extérieure, avoir leurs étiquettes modifiées sous la commande des signaux logiques CE et CG respectivement.

Les données sont portées par exemple par 16 conducteurs en parallèle qui constituent les bus A, B, C et D, ces conducteurs étant référencés par A1 à A16 ; B1 à B16 ; C1 à C16 et D1 à D16. Les données sur le bus A rentrent dans le registre à décalage RAB à raison d'un temps de bit pour l'étiquette de 16 bits (n = 16) suivi de 16 temps de bit pour le mot dont le champ d'information utile est de $16^s16$ = 256 bits (i = 256). Si P, Q, R et S représentent des paquets qui se suivent sur le bus A, on repère, par exemple pour le paquet P, par P1 à P16 les 16 bits d'étiquette du paquet P puis par P17 à P272 les 256 bits d'information utile.

Le fonctionnement général du point de croisement de la figure 3 est le suivant :

Les données relatives à un paquet, P, rentrent dans le premier registre à décalage série-parallèle RAB. Quand le paquet P est contenu en entier dans AB il peut être transféré dans le premier registre tampon d'entrée RTE, en moins d'un temps de bit, entièrement en parallèle, soit sur 272 conducteurs simultanément, avec ou sans modification de son étiquette, sous la commande du signal logique TAB.

La file d'attente MRAM est réalisée par une mémoire RAM dont le temps d'accès est supérieur à une période d'horloge HBA ; d'autre part on sait qu'on ne peut pas lire et écrire en même temps dans la RAM. Si MRAM n'est pas disponible au moment du transfert du paquet P dans RTE, c'est-à-dire si MRAM est en cycle de lecture, le paquet P reste mémorisé en RTE et la demande d'écriture dans MRAM est également mémorisée, en GM. Quand MRAM reste libre, le cycle d'écriture a lieu. Le paquet P contenu dans RTE est alors mis sur le bus de données 3 de MRAM. On notera que le temps de stockage d'un paquet dans RTE est au plus égal à 17 périodes d'horloge HBA soit le temps pour qu'un paquet contenu dans RAB soit remplacé par le paquet suivant.

De façon analogue, les données sur le bus C rentrent dans le deuxième registre à décalage parallèle-série RCD. Quand un paquet est contenu en entier dans RCD il peut être remplacé par le paquet contenu dans le deuxième registre tampon de sortie RTS, en moins d'un temps de bit, entièrement en parallèle, soit sur 272 conducteurs simultanément, avec ou sans modification de son étiquette, sous la commande du signal logique TCD. Dès que ce transfert a eu lieu et si MRAM est libre (pas en cycle d'écriture), MRAM est lue pour recharger RTS. Sinon, la demande de lecture est mémorisée en GM et effectuée dès que possible. Le nouveau chargement de RTS est toujours effectué en un temps inférieur au temps de remplacement d'un paquet par le paquet suivant dans RCD ; pour une horloge HBC à 128 kHz, ce temps de remplacement est égal à 132,6 $^e$s. L'organe de gestion GM gère le bus d'adresse 2 de MRAM, en cycle de lecture et en cycle d'écriture, pour faire fonctionner cette RAM comme une file d'attente. C'est aussi cette partie du composant qui, de préférence, procure une information instantanée sur le remplissage de MRAM.

Sur la figure 4 on a représenté le premier registre à décalage RAB qui comporte 16 entrées série reliées à A1-A16, les entrées relatives à A1 et A16 étant seules représentées. Sont aussi fournis les signaux d'horloge HBA, HPA et le signal de commande logique CE. Symétriquement, la sortie du registre RAB comporte 18 signaux, qui sont : les données destinées à B1 à B16, l'horloge associée aux données B, HPB, et le signal de synchronisation des paquets reçus sur le bus B, HBB. Le registre RAB est constitué de 16 sous registres identiques pour chaque fil de données A1 à A16. Chaque sous registre se compose de 19 bascules D-FF en cascade référencées 1-1,..., 1-19 ;... ; 16-1,..., 16-19. Les 18 premières bascules sont déclenchées sur le front montant de HBA, sur leur entrée d'incrémentation, pour réaliser un registre à décalage de 18 bits. La dix neuvième bascule est déclenchée sur le front descendant de HBA, au moyen de l'inverseur 17 pour que le signal de sortie, sur B1 à B16 soit en phase avec le signal d'entrée sur A1 à A16. On obtient ainsi des données en sortie égales aux données en entrée retardées de 18 périodes HBA, quand il n'y a pas de modification de l'étiquette. En entrée et en sortie, les données changent d'état sur le front descendant de l'horloge associée, HBA et HBB qui sont identiques, comme représenté sur la figure 5 pour A1, A16, B1, B16. Le signal de synchronisation HPA passe à l'état haut pendant la durée de transmission des 16 bits d'étiquette, c'est-à-dire pendant la durée d'une période d'horloge HBA puisque les données sont en parallèle sur 16 fils. Pendant cette durée $T_1$, il peut y avoir modification de l'étiquette au moyen d'un circuit-porte ET 18 qui reçoit les signaux HPA et CE et dont le signal de sortie CP ainsi que son complément $\overline{CP}$ sont transmis à un circuit lo-gique à trois portes NON-ET, 19 pour chaque sous registre. Le circuit logique 19 reçoit par ailleurs le signal de la sortie Q de la dix septième bascule D du sous registre correspondant ainsi que le signal de sortie, correspondant au numéro d'ordre du sous registre associé, du registre d'étiquette E. La sortie du circuit 19 est reliée à l'entrée D de la dix huitième bascule. La fonction réalisée par le circuit 19 équivaut à celle d'un commutateur à deux positions :

$$(Q_1.\overline{CP}) + (E_1.CP)$$

L'étiquette est modifiée lorsque les signaux CE et HPA sont simultanément à l'état haut, ce qui est supposé être le cas à la figure 5.

La dix huitième bascule des 16 sous registres à décalage peut être préchargée par le contenu du registre E de façon à modifier l'étiquette d'une trame d'un paquet. Ce préchargement est réalisé en mettant le contenu du registre E sur les entrées des 16 bascules pendant la durée du signal HPAV à l'état haut, à condition que le signal CE soit aussi à l'état haut pendant ce temps. Quand il n'y a pas de modification d'étiquette, les données sur B1 à B16 et le signal HPB sont égaux respectivement aux données reçues sur A1 à A16 et au signal HPA retardés d'un temps T, comme indiqué par R1, R16, sur la figure 5, qui constitue l'étiquette d'origine du paquet R. La valeur de T est prise égale à 18 périodes d'horloge HBA. En effet, il est nécessaire de synchroniser HPB sur HBB. Cela est réalisé de façon simple en retardant HPA d'une période d'horloge, au moyen des bascules d'entrée 21 et de sortie 22 qui décalent chacune d'une demi-période, pour créer le signal HPB, plutôt qu'en retardant le signal HPA de 273 périodes HBA. On obtient cette simplification de la synchronisation moyennant de retarder les données de 18 périodes d'horloge au lieu de 17. Sur les sorties du registre RAB sont représentés des amplificateurs de régénération des signaux 23. Les 272 bits en parallèle de chaque paquet sont obtenus toutes les 17 périodes d'horloge HBA sur les 272 sorties des bascules D, 2 à 18 des 16 sous registres. La succession dans le temps des bits de 4 paquets consécutifs P, Q, R et S sur les entrées et sorties série A1 à A16 et B1 à B16 ainsi que sur les sorties parallèles AB1 à AB16 porteuses de l'étiquette et AB17 à AB272 porteuses de l'information utile a été représentée à la figure 5. Sur les sorties parallèles AB1 à AB272 les données sont décalées d'une demi-période d'horloge.

La figure 6 représente le premier registre tampon ou registre tampon d'entrée RTE. Ce registre comporte : D = 272 entrées parallèles correspondant aux d sorties de RAB. Ces entrées sont reliées aux entrées D d'autant de bascules D référencées RTE 1 à RTE 272 parmi lesquelles cinq seulement sont représentées. Ces d bascules D sont incrémentées par le signal logique $\overline{HPA.TAB}$. Plus précisément, le registre RTE a pour fonction de mémoriser la trame (le paquet) contenue dans le registre RAB quand celle-ci doit être transférée dans MRAM ; cette mémorisation a lieu sur le front descendant de HPA si le signal TAB est à l'état haut à ce moment là. D'autre part, les signaux AB1 à AB16 sont remplacés par l'étiquette contenue dans F1 à F16 si le signal CF est à l'état bas. Pour la commutation d'étiquettes on retrouve un dispositif logique en tout point comparable à celui de la figure 4 déjà décrit : 16 dispositifs à trois circuits-portes NON-ET 25 permettent d'effectuer le choix entre les signaux sur AB1 à AB16 ou les signaux sur F1 à F16, sur les entrées des bascules RTE1 à RTE16, en fonction de l'état haut, respectivement bas, du signal CF. On notera à ce sujet qu'il n'est pas prévu une demande de transfert de paquet par TAB avec le signal CF à l'état haut et une demande simultanée de modification de l'étiquette du paquet contenu dans le registre RAB par le signal CE. On indique simplement que les signaux CE et CF sont conçus de façon à ne pas engendrer de conflits d'étiquettes. Les sorties TE1 à TE272 des bascules D sont mises sur le bus D1 à D272, c'est-à-dire le bus de données 3 de MRAM pendant l'état bas de WE. Comme décrit ci-dessous WE est une commande d'écriture, initiée par le signal TAB, issue de l'organe GM et qui agit sur la sortie 5 de RTE par effet de commande 3 états, en l'occurrence par mise en basse impédance.

Le registre tampon RTS représenté à la figure 7 est un registre parallèle-parallèle de 272 bits, constitué par 272 bascules D RTS1 à RTS272 dont les entrées D sont connectées au bus de données 3 de MRAM, D1 à D272 et les sorties Q référencées TS1 à TS272 sont connectées au registre de sortie RCD. Les données provenant de MRAM sont mémorisées dans RTS sur le front descendant du signal logique RE, commande de lecture de MRAM produit par l'organe GM sur le conducteur 7. Le signal RE est initié dans l'organe GM à partir du signal TCD et agit sur les entrées d'incrémentation des bascules D du registre RTS.

Le deuxième registre à décalage RCD est représenté sur la figure 8 ; il comporte d entrées parallèles reliées aux sorties de RTS et référencées de la même façon, TS1 à TS257. Les entrées parallèles sont réparties par groupes de 16 dans 16 sous registres identiques dont deux seulement, le premier et le dernier sont représentés. Chaque sous registre reçoit une entrée série du bus C, telle $C_1$, $C_{16}$, et comporte une sortie série sur le bus D, telle $D_1$, $D_{16}$. Comme pour le registre RAB, sont aussi fournis les signaux d'horloge HBC et HPC, les connexions et les signaux d'horloge résultants engendrés HBD et HPD étant analogues et comparables à ce qui est décrit ci-dessus en référence aux figures 4 et 5. Par différence avec le registre RAB, par contre, on notera que la logique d'insertion des bits d'information est plus complexe. En effet, dans RCD il existe un choix binaire pour l'information utile concernant les bascules 1-1,..., 1-17 ;... ; 16-1,..., 16-17 des sous registres et un choix de un parmi quatre pour l'information d'étiquette concernant les bascules 1-18 à 16-18. Les choix binaires qui concernent soit l'information utile de i bits du paquet en provenance du bus C soit l'information utile de i bits du paquet en provenance du registre RTS sont effectués, en moins d'une période d'horloge HBC au moyen de circuits logiques à trois portes NON-ET 27 qui fonctionnent comme les circuits 25 de la figure 6 mais en l'occurrence le signal logique et son complémentaire qui sont transmis en entrée des circuits 27 sont les signaux K2 et K1 obtenus par le circuit logique de la figure 9 (circuit-porte ET 31 et inverseur 32) :

K2 = HPC.TCD = PTCD
K1 = $\overline{K2}$ = $\overline{HPC.TCD}$

De façon comparable le choix des n bits d'étiquette, en provenance du bus C, du registre RTS, du registre H ou du registre G, est effectué au moyen des circuits logiques à cinq portes NON-ET 29 qui reçoivent les signaux K3, K4, K5, K6 engendrés par le circuit logique de la figure 9 à partir des signaux logiques : HPC, TCD, CH, CG.

En entrée et en sortie du registre RCD les données changent d'état sur le front descendant de l'horloge associée comme représenté sur le diagramme de temps de la figure 10 où les bits d'information sont repérés seulement par leurs numéros d'ordre sauf en ce qui concerne les bits en provenance de RTS dont le numéro d'ordre est précédé des lettres TS. Le signal de synchronisation passe à l'état haut pendant les 16 bits de l'étiquette. Il dure donc en l'occurrence une période d'horloge HBC puisque les données sont en parallèle sur 16 fils. Quand il n'y a pas de modification d'étiquette, les données D1 à D16 sur le bus D et le signal HPD sont égaux aux données C1 à C16 reçues du bus C et au signal HPC retardés d'un temps T'. La valeur de T' est prise égale à 18 périodes d'horloge HBC. En effet il est nécessaire de synchroniser HPD sur HBD. Cela est fait en retardant PC d'une période d'horloge pour créer PD plutôt qu'en retardant HPC de 273 bits. Comme pour le registre RAB les données sont retardées de 18 bits et non de 17 bits, au moyen de la même structure, pour pouvoir retarder HPD de 1 bit par rapport à HPC et garantir simplement le maintien de la synchronisation entre HPD et HBD. Les 17 bascules k-2 à k-18 (k variant de 1 à 16) des 16 sous registres à décalage peuvent être préchargées par le contenu du registre tampon de sortie RTS, de façon à effectuer un transfert d'un paquet contenu dans MRAM dans le registre d'arrivée RCD. Ce préchargement est réalisé en mettant le contenu du registre RTS sur les entrées des 272 bascules D pendant la durée du signal PTCD à l'état haut, issu de HPC, à condition que la logique du transfert le permette.

La dernière bascule 1-18 à 16-18 des 16 sous registres à décalage peut être préchargée par le contenu des registres G ou H de façon à modifier l'étiquette d'un paquet. Ce chargement est réalisé de façon identique à celui décrit au paragraphe précédent en fonction de la logique de décision choisie. Cette logique de décision est par exemple celle qui est indiquée dans le tableau I suivant, dans lequel le signe * symbolise un état logique indifférent, 1 ou 0.

TABLEAU I

| | ACTION | Fonction logique | HPC | TCD | CH | CG |
|---|---|---|---|---|---|---|
| Données | Pas de transfert | K1 | condition K2 non remplie | | | |
| | Transfert MRAM | K2 | 1 | 1 | * | * |
| Etiquette | Pas de transfert | K3 | conditions K4,K5, ou K6 non remplies. | | | |
| | Transfert MRAM | K4 | 1 | 1 | 1 | * |
| | Transfert H | K5 | 1 | 1 | 0 | 0 |
| | transfert G | K6 | 1 | * | * | 1 |

Les fonctions logiques K3, K4, K5 et K6 sont réalisées par le circuit logique de la figure 9 (circuits-porte ET 31, 33, NON-OU 34 pour K3, circuits ET 31 et 33 pour K4, inverseurs 35 et 36, circuit ET 31 et circuit ET 37 pour K5 et circuit ET 38 pour K6). On obtient en effet :

$$K3 = \overline{[(HPC.TCD).CH]+[(HPC.TCD).\overline{CH}.\overline{CG}]+(CG.HPC)}$$

K4 = HPC.TCD.CH
K5 = HPC.TCD.$\overline{CH}$.$\overline{CG}$
K6 = CG.HPC

On notera, dans ce qui précède, qu'on a choisi de donner à la commande CG la priorité sur la commande CH. On notera par ailleurs, à la figure 10, qu'il y a un transfert d'étiquette en provenance du registre H lors du passage d'un paquet du registre RTS au registre RCD, ce qui correspond au signal logique K5 à l'état haut soit, comme indiqué à la ligne 5 du Tableau I ci-dessus, HPC et TCD à l'état haut et CH et CG à l'état bas.

La figure 11 représente sous forme d'un schéma synoptique l'organe de gestion GM de MRAM et les figures qui suivent 12 à 16 représentent des parties de l'organe GM ou servent à expliciter le fonctionnement de ces parties.

L'organe GM effectue la commande d'adressage de MRAM. Il se compose pour l'essentiel de 5 blocs :
- le bloc de commande de MRAM 41
- le bloc de taux de remplissage 42
- le pointeur d'adresse écriture 43
- le pointeur d'adresse lecture 44
- le circuit de seuil de MRAM 45

A la partie droite de la figure 11 figurent certains éléments de la figure 3 tels que le registre RTE et sa sortie 5, MRAM, le bus de données 3, le bus d'adresse 2, le registre tampon RTS et les conducteurs 4 et 7. Le bloc de commande 41 reçoit le signal d'horloge HAC, les signaux logiques PTAB et PTCD et, en provenance du bloc 42, deux signaux logiques MRAMP et MRAMV. Les signaux PTAB et PTCD sont les signaux TAB et TCD validés respectivement par les signaux HPA et HPC à l'état haut. Les signaux MRAMP et MRAMV indiquent si MRAM est pleine ou vide respectivement. Le bloc 41 émet le signal WE vers le pointeur d'adresse écriture 43, un organe de validation d'adresse 46, le circuit 45, le conducteur 4 et le signal RE vers le pointeur d'adresse lecture 44, un organe de validation d'adresse lecture 47, le circuit 45 et le conducteur 7. Le circuit 45 reçoit en outre les signaux MRAMP et MRAMV et émet un signal de seuil SMRAM. Le pointeur d'adresse écriture 43 émet, par l'intermédiaire du circuit de validation 46, l'adresse d'écriture sur le bus d'adresse 2, sur 8 bits, référencés AW1 à AW8 en sortie de 43 puis A0 à A7 sur le bus 2 et, directement les bits AW1 à AW8 plus le bit de poids fort AW9, encore référencé PFE, au bloc de taux de remplissage 42. De façon symétrique, le pointeur d'adresse lecture 44 émet, par l'intermédiaire du circuit de validation 47, l'adresse de lecture sur le bus d'adresse 2, sur 8 bits, référencés AR1 à AR8 en sortie de 44 puis A0 à A7 sur le bus 2 et, directement les bits AR1 à AR8 plus le bit de poids fort AR9 encore référencé PFL au bloc de taux de remplissage 42.

Comme déjà indiqué ci-dessus, la mémoire MRAM est gérée comme une file d'attente. Le bloc de commande 41 détermine les cycles d'écriture et de lecture en fonction des transferts de paquets de RAB vers MRAM et de MRAM vers RCD. Il indique aussi si MRAM est vide ou pleine. Le pointeur d'adresse écriture 43 donne la case mémoire où le paquet contenu dans RAB puis RTE doit être écrit dans MRAM. Il est incrémenté après chaque lecture. Le pointeur d'adresse lecture 44 donne la case mémoire où le paquet doit être lu pour être écrit dans RTS puis RCD. Il est incrémenté après chaque lecture. Le circuit de seuil 45 fournit le signal SMRAM qui indique si MRAM est remplie au dessus d'un seuil prédéterminé contenu dans un registre J non représenté, par exemple contenu dans le circuit 45.

Le fait d'utiliser une mémoire RAM pour réaliser la fonction de file d'attente souhaitée introduit les contraintes suivantes : d'une part, il ne faut pas lire à un endroit où il n'y a pas de données ; le compteur de lecture doit donc être toujours en retard sur le compteur d'écriture. D'autre part il ne faut pas écrire au delà de la zone mémoire non encore lue. Dans ces conditions, il est nécessaire de surveiller les progressions de la lecture et de l'écriture. Une simple comparaison des pointeurs 43 et 44 qui sont en l'occurrence des compteurs est insuffisante. En effet, la structure étant cyclique, le compteur d'écriture est tantôt plus grand tantôt plus petit que le compteur de lecture. La solution retenue consiste à mettre un bit supplémentaire, de poids fort, à chaque pointeur-compteur, pour déterminer si les pointeurs lecture et écriture sont dans le même tour d'exploitation de la RAM ou dans deux tours adjacents. Ces bits de poids fort sont référencés par AW9 (PFE) et par AR9 (PFL). La comparaison des adresses d'écriture et de lecture ainsi que de leurs poids forts donne les indications suivantes :
- MRAM correcte → autorisation de lire ou d'écrire
- MRAM vide → stopper la lecture
- dépassement → stopper la lecture
- MRAM pleine → stopper l'écriture
- dépassement → stopper l'écriture.

Le Tableau II ci-dessous indique les critères de la logique de décision à satisfaire, ce qui est effectué en premier lieu par le bloc de taux de remplissage 42 pour la détermination des signaux logiques MRAMP et MRAMV puis par le bloc taux de remplissage 41 pour la détermination des signaux logiques WE et RE.

TABLEAU II

| PFE | PFL | AW = AR | AW>AR | ACTION | MRAMV | MRAMP |
|---|---|---|---|---|---|---|
| 0 | 0 | 0 | 1 | MRAM correcte → lire ou écrire. | 0 | 0 |
| 0 | 0 | 1 | 0 | MRAM vide → stopper lecture | 1 | 0 |
| 0 | 0 | 0 | 0 | dépassement → stopper lecture. | 1 | 0 |
| 1 | 0 | 0 | 1 | dépassement → stopper écriture. | 0 | 1 |
| 1 | 0 | 1 | 0 | MRAM pleine → stopper écriture. | 0 | 1 |
| 1 | 0 | 0 | 0 | MRAM correcte → lire ou écrire. | 0 | 0 |
| 1 | 1 | 0 | 1 | MRAM correcte → lire ou écrire. | 0 | 0 |
| 1 | 1 | 1 | 0 | MRAM vide → stopper lecture. | 1 | 0 |
| 1 | 1 | 0 | 0 | dépassement → stopper lecture. | 1 | 0 |
| 0 | 1 | 0 | 1 | dépassement → stopper écriture. | 0 | 1 |
| 0 | 1 | 1 | 0 | dépassement → stopper écriture. | 0 | 1 |
| 0 | 1 | 0 | 0 | MRAM correcte → lire ou écrire. | 0 | 0 |

Le bloc de taux de remplissage 42 contient en premier lieu un comparateur de registres, non représenté, qui reçoit les bits AW1-AW8 et les bits AR1-AR8 et compare ainsi les contenus des pointeurs d'adresses d'écriture 43 et de lecture 44. Ce comparateur, d'un type connu, pourraît être par exemple constitué par l'association de plusieurs circuits intégrés numériques C-MOS, du type HEF4585B, comparateur de nombres à 4 bits, réalisés par la société Philips. La sortie du comparateur, en logique positive comme c'est le cas général dans la présente description, est constitué par les signaux logiques : AW = AR (égalité du contenu des pointeurs pour le niveau haut), et : AW>AR (pointeur en écriture en avance sur le pointeur en lecture pour le niveau haut). Le bloc de taux de remplissage 42 contient en outre le circuit logique de la figure 12 qui reçoit les signaux logiques PFE et PFL en provenance des pointeurs 43 et 44, les signaux logiques : AW = AR et AW>AR en provenance du comparateur de registres décrit ci-dessus et qui fournit les signaux MRAMP et MRAMV. Pour l'obtention du Tableau logique II en ce qui concerne MRAMV et MRAMP, le circuit logique de la figure 12 comporte deux circuits-portes OU-exclusif 49 et 51, deux inverseurs 52 et 53, et deux circuits-portes ET 54 et 55 qui fournissent respectivement à leur sortie les signaux MRAMP et MRAMV. Le circuit 49 reçoit les signaux PFE et PFL, le circuit 51 reçoit les signaux AW = AR et AW>AR, le circuit 54 reçoit le signal de sortie des circuits 49 et 51 et le circuit 55 reçoit le signal de sortie inversé du circuit 49 et le signal AW>AR inversé.

Le bloc de commande 41 est représenté plus en détail à la figure 13 et les diagrammes de temps de la figure 16 servent à expliciter son fonctionnement. A une symétrie de fonctionnement pour la lecture ou pour l'écriture dans MRAM correspond une symétrie de structure qui apparaît bien entre le haut (écriture) et le bas (lecture) de la figure 13. Pour engendrer le signal WE, le bloc 41 comporte deux inverseurs 57, 58, une bascule D 59 dont la sortie Q est référencée WRQ, un circuit ET 61, un circuit OU 62, une bascule D 63 dont la sortie Q engendre le signal WE et dont la sortie $\overline{Q}$ sert à remettre à zéro des bascules D 64, 65 et 66, et des bascules D 67 et 68. Les sorties $\overline{Q}$ respectives des bascules 64, 65 et 66 sont référencées $Q_1$, $Q_2$ et $Q_3$ respectivement, et les sorties Q des bascules 67 et 68, RWE et $Q_5$ respectivement, $Q_1$, $Q_2$, $Q_3$, RWE et $Q_5$ désignant aussi les signaux logiques portés par ces sorties. Les bascules 59 et 67 sont remises à zéro par le signal $Q_5$ et la bascule 63 par le signal RWE. Le circuit ET 61 reçoit le signal WRQ et le signal RRQ inversé, RRQ étant le signal homologue de WRQ en lecture, et sa sortie est reliée à une entrée du circuit OU 62 qui reçoit sur une autre entrée le signal WE. La sortie du circuit 62 est reliée à l'entrée D de la bascule 63 qui reçoit sur son entrée de mémorisation le signal d'horloge HAC. Les signaux $Q_1$, $Q_2$ et $Q_3$ sont rebouclés sur les entrées D des bascules 64, 65, 66 respectivement. La sortie Q de la bascule 64 est reliée à l'entrée de mémorisation de la bascule 65. Les signaux $Q_2$ et $Q_3$ sont fournis à l'entrée de mémorisation des bascules 66 et 67 respectivement. L'entrée de mémorisation des bascules 64 et 68 reçoit le signal d'horloge HAC inversé. Les éléments homologues qui engendrent le signal logique RE sont référencés 107 à 118 et on retrouve les signaux homologues RRQ, RRE. Une seule légère différence entre les parties haute et basse du schéma de la figure 13 est que la bascule 114 est remise à zéro à partir de la sortie Q de la bascule 118 et non à partir de la sortie $\overline{Q}$ de la bascule 113.

Cet agencement de circuit permet d'obtenir les diagrammes de temps souhaités décrits à la figure 14 où on a supposé qu'une demande de lecture intervenait alors qu'une demande d'écriture était en cours. Toute la logique représentée à la figure 13 est commandée par l'horloge HAC dont la fréquence est nécessairement supérieure ou égale à la fréquence la plus haute parmi les horloges HBA et HBC. Le signal logique d'extraction d'un paquet vers le registre RTE, PTAB, est mémorisé, en 41, pour donner le signal de

14

demande d'écriture WRQ, à condition que MRAM ne soit pas pleine, soit : MRAMP = 0, sinon le paquet est perdu. Si MRAM n'est pas en cycle de lecture, c'est-à-dire si RRQ = 0, voir figure 14, WRQ qui passe à l'état haut fait aussi passer à 1 le signal d'écriture WE pendant 6,5 périodes de HAC, cette dernière durée étant déterminée par l'ensemble des bascules 64, 65, 66. Si par contre MRAM était en cycle de lecture, le cycle d'écriture serait déclenché 1,5 période de HAC après le passage à l'état bas du signal de lecture RE qui marque la fin du cycle de lecture. Le signal logique de lecture d'un paquet dans MRAM pour l'insérer dans le registre RTS, PTCD, est mémorisé pour donner le signal de demande de lecture RRQ, à condition que MRAM ne soit pas vide, soit : MRAMV = 0, sinon la demande de lecture est perdue et RTS conserve son ancien contenu. Si MRAM n'est pas en cycle d'écriture, soit WRQ = 0, RRQ qui passe à l'état haut fait passer à 1 le signal de lecture RE pendant 6,5 périodes de HAC. Si par contre MRAM est en demande de cycle d'écriture ou en cycle d'écriture comme représenté à la figure 14, le cycle de lecture est déclenché 1,5 période de HAC après le passage à l'état bas du signal d'écriture WE qui marque la fin du cycle d'écriture. On rend ainsi compatibles les demandes d'écriture et de lecture dans MRAM, ce qui garantit l'asynchronisme total requis entre ces demandes et on réalise bien les actions indiquées dans le tableau II ci-dessus.

Le pointeur d'adresse écriture 43 représenté à la figure 15 avec son dispositif de sortie 46, est un compteur asynchrone de 8 bits comptant de 0 à 255. Il est incrémenté sur chaque front descendant de WE. Les bits AW1 à AW8 sont mis en basse impédance et mis sur le bus d'adresse 2, A0-A7 de MRAM pendant l'état haut de WE. Le bit AW9 est le poids fort écriture PFE. La figure 15 représente aussi les éléments 44 et 47.

De préférence, le point de croisement comporte aussi le circuit de seuil de MRAM 45 représenté à la figure 16. Ce circuit 45 ne sert pas directement au fonctionnement du point de croisement mais indirectement par l'intermédiaire du réseau auquel appartient ce point de croisement. En effet, le circuit 45 fournit le signal logique SMRAM qui est une information sur l'état de chargement de MRAM. Par l'intermédiaire du réseau, cette information peut avoir une influence sur les signaux logiques TAB et TCD. Le circuit 45 comporte le registre J, relié par ses sorties en parallèle J1 à J7 aux entrées P1 à P7 d'un compteur-décompteur 71, et 4 circuits-portes NON-OU 72, 73, 74, 75. Le circuit 72 reçoit les signaux WE et RE et sa sortie est reliée à l'entrée de données du compteur-décompteur 71. Le signal WE est relié à une entrée du circuit 73 dont une deuxième entrée est reliée à la sortie du circuit 74. Le signal RE est relié à une entrée du circuit 74 dont une deuxième entrée est reliée à la sortie du circuit 73 et dont la sortie est reliée à l'entrée de comptage-décomptage du circuit 71. Le circuit 75 reçoit les signaux MRAMP et MRAMV et sa sortie est reliée à l'entrée de reset PE du compteur 71. Le signal MRAMP est aussi fourni à l'entrée P8 du circuit 71. Le registre J contient la valeur complémentée d'un seuil S, soit : 128-S, seuil auquel on souhaite comparer le contenu instantané de MRAM. Le signal SMRAM à la sortie Q8 du circuit 71 passe de l'état bas à l'état haut lorsque MRAM est remplie au dessus du seuil S. Le bit Q8 du compteur indique donc lorsqu'il est à 1 que MRAM est remplie au dessus du seuil S. Ceci est obtenu grâce au fait que le compteur-décompteur 71 est incrémenté à chaque ordre d'écriture, et est décrémenté à chaque ordre de lecture. On notera que l'adressage de MRAM est sur 7 bits alors que le compteur 71 est sur 8 bits. Quand MRAM est vide, le compteur 71 est présetté immédiatement à la valeur de : 128-S pour les bits 1 à 7 et à zéro pour le bit 8. Quand MRAM est pleine, le compteur 71 est présetté immédiatement à la valeur de : 128-S pour les bits 1 à 7 et à 1 pour le bit 8.

Les deux modes de réalisation sont réalisés de préférence en technologie C-MOS, sous la forme d'un ou de deux composants de circuit intégré ; lorsqu'il y a deux composants ils sont, en vue de leur fonctionnement, implantés à quelques centimètres l'un par rapport à l'autre, l'un d'eux étant constitué par les éléments DE, TEX, DI, TIN, représentés à la figure 2.

**Revendications**

1. Point de croisement entre deux bus monodirectionnels (A-B, C-D) indépendants l'un de l'autre pour multiplexage ATD d'information numérique constituée de paquets de données de longueur fixe consécutifs véhiculés par lesdits bus, ces paquets comportant un champ d'étiquette de n bits et un champ d'information de i bits n et i étant fixes et tels que n + i = d, pour transmettre sélectivement de l'information numérique d'un bus à l'autre, caractérisé en ce qu'il est constitué par la combinaison de deux blocs fonctionnels de circuit intégré :
   - Un premier bloc fonctionnel constitué par la succession en cascade entre l'un desdits bus, dit bus de départ, et l'autre bus, dit bus d'arrivée :
     a) un premier registre à décalage (RAB) à entrée(s) série-d sorties parallèles disposé en coupure sur le bus de départ,

b) un premier registre tampon (RTE) à d entrées parallèles-d sorties parallèles,

c) une mémoire RAM (MRAM) à m emplacements de d bits munie d'un bus d'adresses (2) pour les m emplacements,

d) un deuxième registre tampon (RTS) à d entrées parallèles-d sorties parallèles ;

e) un deuxième registre à décalage (RCD) à d entrées parallèles-sortie(s) série disposé en coupure sur le bus d'arrivée,

- et un deuxième bloc fonctionnel logique de décision de commutation comportant au moins, disposés symétriquement par rapport aux bus de départ et d'arrivée, un organe de décision d'extraction (DE) (respectivement d'insertion -DI) de paquet, associé chacun à une table de décision préprogrammée (TEX, TIN), qui reçoit les données d'étiquette des paquets sur le bus de départ (respectivement sur le bus d'arrivée) (A-B, C-D) et qui pilotent chacun un organe de gestion (GM) de la RAM relié à cette dernière par ledit bus d'adresses (2), l'organe de gestion gérant la RAM comme au moins une file d'attente pour les paquets et recevant à cet effet un signal d'horloge HAC, des conducteurs de synchronisation d'horloge bit (HBA, HBB, HBC, HBD), d'horloge étiquette (HEAB, HECD) et d'horloge paquet (HPA, HPB, HPC, HPD) étant prévus, et l'extraction non destructive de paquets du bus de départ ainsi que l'insertion de paquets sur le bus d'arrivée étant effectuées de manière asynchrone l'une par rapport à l'autre.

**2.** Point de croisement entre deux bus (A-B, C-D) selon la revendication 1, caractérisé en ce que ledit deuxième bloc fonctionnel comporte en outre des registres internes (E, F, G, H) chargés avec des valeurs d'étiquette, chacun de ces registres comportant des sorties parallèles qui peuvent être commutées par un signal externe (CE, CF, CG, CH) sur des (les) entrées parallèles des champs d'étiquette respectivement dudit premier registre à décalage, dudit premier registre tampon, ou dudit deuxième registre à décalage.

**3.** Point de croisement entre deux bus (A-B, C-D) selon la revendication 1 ou 2, tel que : $d \geqq 144$.

**4.** Point de croisement entre deux bus (A-B, C-D) selon l'une des revendications 1 à 3, caractérisé en ce qu'il est réalisé sous la forme d'un composant de circuit intégré unique.

**5.** Point de croisement entre deux bus (A-B, C-D) selon l'une des revendications 1 à 3, caractérisé en ce qu'il est réalisé sous la forme de deux composants de circuit intégré, un premier composant qui comporte lesdits organes de décision d'extraction et d'insertion de paquets (DE, DI) ainsi que lesdites tables de décision préprogrammées (TEX, TIN) et un deuxième composant qui comporte les autres éléments du point de croisement (RAB, RTE, MRAM, RTS, RCD).

**6.** Point de croisement selon la revendication 5, caractérisé en ce que lesdits premier et deuxième composants de circuit intégré sont, en vue de leur fonctionnement, implantés à quelques centimètres l'un par rapport à l'autre.

**7.** Point de croisement entre deux bus (A-B, C-D) selon l'une des revendications 1 à 6, caractérisé en ce qu'il est réalisé en technologie C-MOS.

**8.** Point de croisement entre deux bus (A-B, C-D) selon l'une des revendications 1 à 7, caractérisé en ce qu'il comporte des premier (RAB), respectivement deuxième (RCD) registres à décalage à 16 entrées et 16 sorties série, conçus pour contenir des paquets de longueur d au moins égale à 272 bits et dont la mémoire RAM (MRAM) comporte au moins 128 emplacements de mots de 272 bits ou plus.

**Claims**

**1.** Cross-point circuit between two one-way buses (A-B, C-D) independent of one another for asynchronous time-division (ATD) multiplexing digital information, which digital information is in the form of consecutive fixed-length data packets transported over said buses, these packets comprising a label field of n bits and a information field of i bits, n and i being fixed and such that $n + i = d$, for selectively transmitting digital information from one bus to another, characterized in that the cross-point circuit comprises the combination of two integrated circuit building blocks:

- a first integrated circuit building block comprising the following circuit elements connected in cascade between one of said buses, called start bus, and the other bus, called arrive bus:

a) a first shift register (RAB) having at least one serial input and d parallel outputs, which shift register is inserted into the start bus,

b) a first buffer register (RTE) having d parallel inputs and d parallel outputs,

c) a RAM (MRAM) having m locations of d bits comprising an address bus (2) for the m locations,

d) a second buffer register (RTS) having d parallel inputs and d parallel outputs; and

e) a second shift register (RCD) having d parallel inputs and at least one serial output, which second shift register is inserted into the arrive bus, and

- a second integrated circuit building block comprising at least one decision unit arranged symmetrically relative to the start and arrive buses, for extracting (DE) data from the start bus and one for inserting (DI) data into the arrive bus, the decision unit being associated each with a respective preprogrammed decision Table (TEX, TIN) for receiving label data of the packets over the start bus (over the arrive bus respectively) (A-B, C-D), and which control each a management unit (GM for managing the RAM) connected thereto over said address bus (2), whilst the management unit manages the RAM, as at least one packet queue and receives thereto a clock signal HAC, conductors to synchronise the bit clock (HBA, HBB, HBC, HBD), label clock (HEAB), HECD) and packet clock (HPA, HPB, HPC, HPD) are provided, and the non-destructive extraction of packets over the start bus as well as the insertion of the packets over the arrive bus is effected in a mutually asynchronous way.

2. Cross-point circuit between two buses (A-B, C-D) as claimed in Claim 1, characterised in that invention said second building block further includes internal registers (E, F, G, and H) loaded by label values, while these registers each comprise parallel outputs which may be switched over by a external signal (CE, CF, CG, CH) to (the) parallel inputs of the label fields of said first shift register, said first buffer register, or said second shift register respectively.

3. Cross-point circuit between two buses (A-B, C-D) as claimed in Claim 1 or 2, so that: $d \geq 44$.

4. Cross-point circuit between two buses (A-B, C-D) as claimed in one of the Claims 1 to 3, characterised in that it is constructed in the form of a single integrated circuit component.

5. Cross-point circuit between two buses (A-B, C-D) as claimed in one of the Claims 1 to 3, characterised in that it is constructed in the form of two integrated circuit components, a first component which comprises said decision units for extracting or inserting packets (DE, DI) as well as said pre-programmed decision Tables (TEX, TIN) and a second component which comprises the further elements of the cross-point circuit (RAB, RTE, MRAM, RTS, RCD).

6. Cross-point circuit as claimed in Claim 5, characterised in that said first and second integrated circuit components, in view of their operation, are inserted several centimetres apart.

7. Cross-point circuit between two buses (A-B, C-D) as claimed in one of the Claims 1 to 6, characterised in that it is constructed in C-MOS technology.

8. Cross-point circuit between two buses (A-B, C-D) as claimed in one of the Claims 1 to 7, characterised in that it comprises a first shift register (RAB) or a second shift register (RCD) respectively, having 16 serial inputs and 16 serial outputs, designed to comprise packets of length d at least equal to 272 bits and whose RAM memory (MRAM) comprises at least 128 word locations of 272 bits or over.

**Patentansprüche**

1. Koppelpunkt zwischen zwei unabhängig voneinander wirkenden Einwegsammelleitungen (A-B, C-D) zum ATD-Multiplexen digitaler Information, die aus aufeinanderfolgenden Datenpaketen fester Länge besteht, die über die obengenannten Sammelleitungen transportiert werden, wobei diese Pakete ein aus n Bits bestehendes Etikettfeld und ein aus i Bits bestehendes Informationsfeld aufweisen, wobei n und i Festwerte sind, so daß n + i = d ist, zum selektiven Übertragen digitaler Information von der einen Sammelleitung zu der anderen, dadurch gekennzeichnet, daß er durch zwei kombinierte integrierte Schaltungsblöcke gebildet wird, und zwar:

- einen ersten Schaltungsblock, der aus einer Kaskadenschaltung aus den nachfolgenden Elementen besteht, wobei diese Kaskadenschaltung sich zwischen der einen der genannten Sammelleitungen, der Ausgangssammelleitung, und der anderen, der Eingangssammelleitung, befindet:

a) einem ersten Schieberegister (RAB) mit Reihe-Eingängen (einem Reihe-Eingang) und d Parallel-Ausgängen, das in dem Ausgangssammelleitungsabschnitt vorgesehen ist,

b) einem ersten Pufferregister (RTE) mit d Parallel-Eingängen und d Parallel-Ausgängen,

c) einem RAM-Speicher (MRAM) mit m d-Bit-Speicherstellen mit einer Adreßsammelleitung (2) für die m Stellen,

d) einem zweiten Pufferspeicher (RTS) mit d Parallel-Eingängen und d Parallel-Ausgängen,

e) einem zweiten Schieberegister (RCD) mit d Parallel-Eingängen und Reihe-Ausgängen (einem Reihe-Ausgang), das in dem Eingangssammelleitungsabschnitt vorgesehen ist,

- und einen zweiten logischen Schaltentscheidungsblock mit mindestens einer gegenüber der Ausgangs- und Eingangssammelleitung symmetrisch vorgesehenen, einer vorprogrammierten Entscheidungstabelle (TEX, TIN) zugeordneten Paketauszugs- (DE)(bzw. -einfüge)-entscheidungseinheit (DI), die die Etikettdaten der Pakete über die Ausgangssammelleitung (bzw. über die Eingangssammelleitung) (A-B, C-D) erhält und über die obengenannte Adreßsammelleitung (2) eine Steuereinheit (GM) des damit verbundenen RAM steuert, während die Steuereinheit den RAM als wenigstens eine Paketwarteliste steuert und dazu ein Taktimpulssignal HAC erhält, wobei weiterhin Leiter zum Synchronisieren des Bit-Taktimpulses (HBA, HBB, HBC, HBD), des Etikettaktimpulses (HEAB, HECD) und des Pakettaktimpulses (HPA, HPB, HPC, HPD) vorgesehen sind, und wobei der nicht-destruktive Auszug von Paketen über die Ausgagsammelleitung sowie das Einfügen der Pakete über die Eingangssammelleitung auf gegenseitig synchrone Weise erfolgt.

2. Koppelpunkt zwischen zwei Sammelleitungen (A-B, C-D) nach Anspruch 1, dadurch gekennzeichnet, daß der zweite Funktionsblock weiterhin innere Register (E, F, G, H )aufweist, die mit den Etikettwerten geladen sind, wobei jedes dieser Register einen parallelen Ausgang aufweist, der durch ein externes Signal (CE, CF, CG, CH) an (den) parallelen Eingängen der Etikettfelder des ersten Schieberegisters, des ersten Pufferregisters bzw. des zweiten Schieberegisters geschaltet wird.

3. Koppelpunkt zwischen zwei Sammelleitungen (A-B, C-D) nach Anspruch 1 oder 2, derart, daß d ≥ 144 ist.

4. Koppelpunkt zwischen zwei Sammelleitungen (A-B, C-D) nach einem der Ansprüche 1 bis 3, dadurch gekennzeichnet, daß er in Form eines Teils einer einzigen integrierten Schaltung ausgebildet ist.

5. Koppelpunkt zwischen zwei Sammelleitungen (A-B, C-D) nach einem der Ansprüche 1 bis 3, dadurch gekennzeichnet, daß er in Form zweier Teile einer integrierten Schaltung ausgebildet ist, wobei ein erster Teil mit den genannten Paket-Entscheidungsauszug-und-einfügeelementen (DE, DI) sowie den genannten vorprogrammierten Entscheidungstabellen (TEX, TIN) und ein zweiter Teil mit den anderen Elementen des Koppelpunktes (RAB, RTE, MRAM, RTS, RCD) versehen ist.

6. Koppelpunkt nach Anspruch 5, dadurch gekennzeichnet, daß der genannte erste und zweite Teil der integrierten Schaltung im Hinblick auf ihre Wirkung in einem Abstand einiger Zentimeter voneinander vorgesehen sind.

7. Koppelpunkt zwischen zwei Sammelleitungen (A-B, C-D) nach einem der Ansprüche 1 bis 6, dadurch gekennzeichnet, daß in C-MOS-Technologie ausgebildet ist.

8. Koppelpunkt zwischen zwei Sammelleitungen (A-B, C-D) nach einem der Ansprüche 1 bis 7, dadurch gekennzeichnet, daß er erste (RAB) bzw. zweite (RCD) Schieberegister mit 16 Reihen-Eingängen und 16 Reihen-Ausgängen aufweist zum Enthalten von Paketen einer Länge d gleich wenigstens 272 Bits, wobei der Speicher RAM (MRAM) mindestens 128 Wortstellen von 272 Bits oder mehr aufweist.

FIG.3

FIG.4

FIG.5

FIG.6

FIG.7

**FIG.8**

**FIG.10**

**FIG.12**

**FIG.9**

**FIG.11**

FIG.13

FIG.14

**FIG.15**

**FIG.16**